# EUROPEAN PATENT APPLICATION

(11) **EP 3 128 403 A1**
(43) Date of publication of application: **08.02.2017**
(21) Application number: 15773459.1
(22) Date of filing: 30.03.2015
(51) Int. Cl.: G06F 3/048, G06F 3/0488, G09G 5/00, G09G 5/36, G09G 5/38, H04N 5/74

(54) **BIDIRECTIONAL DISPLAY METHOD AND BIDIRECTIONAL DISPLAY DEVICE**

(30) Priority: 01.04.2014 JP 2014075192
(71) Applicant: Seiko Epson Corporation, Tokyo 160-8801 (JP)
(72) Inventor: IMAI, Shun, Suwa-shi Nagano 392-8502 (JP); YOSHIDA, Shingo, Suwa-shi Nagano 392-8502 (JP)
(74) Representative: Miller Sturt Kenyon
(86) International application number: PCT/JP2015/001845
(87) International publication number: WO 2015/151506

(57) **Abstract**

A bidirectional display method includes: having an image signal inputted from an external device; displaying an image on an image screen on the basis of a display signal; detecting an operation to the image screen; drawing an operation input object corresponding to the operation to the image screen; outputting the display signal for displaying a combined image formed by combining an external image based on the image signal and the operation input object; detecting a change in an attribute of the image signal or in the image signal; and link-editing the operation input object so as to correspond to a change in the external image when a change in the attribute of the image signal or in the image signal is detected.

## Description

### Technical Field

The present invention relates to a bidirectional display method and a bidirectional display device.

### Background Art

A bidirectional display device which combines and displays an image based on an image signal inputted from an external device and an image formed by drawing an object such as a character or graphic pattern corresponding to an operation to an image screen is known. Here, an image based on an image signal from an external device is referred to as external image, and an object corresponding to an operation to an image screen is referred to as operation input object.

PTL 1 discloses a technique in which, on the basis of scroll information or the like of which an OS (operating system) of a PC (personal computer) notifies an application program, a comment display independent of the application program is moved on the image screen or erased from the image screen.

### Citation List

### Patent Literature

PTL 1: JP-A-9-258948

### Summary of Invention

### Technical Problem

Incidentally, since an image signal inputted to a bidirectional projectorfrom an external device is a signal for displaying an image drawn by the external device, the external image changes when an operation to the external device is carried out. In contrast, an operation input object is an image drawn by the bidirectional projector and is an image on which the external device is not involved in any processing. Thus, in the related-art bidirectional projector, even if the image signal inputted from the external device changes, the operation input object does not change. Therefore, for example, when the external device corresponding to the external image is replaced, an operation input object independent of the external image after the change is projected with the external image after the change. Then, there is a problem that an operation for editing the operation input object is necessary in order to erase the operation input object independent of the external image after the change.

The invention has been made in order solve such a problem, and an object of the invention is to obviate the need for the operation for editing the operation input object that no longer corresponds to the external image.

### Solution to Problem

(1) A bidirectional display method to achieve the foregoing object includes: having an image signal inputted from an external device; displaying an image on an image screen on the basis of a display signal; detecting an operation to the image screen; drawing an operation input object corresponding to the operation to the image screen; outputting the display signal for displaying a combined image formed by combining an external image based on the image signal and the operation input object; detecting a change in an attribute of the image signal or in the image signal; and link-editing the operation input object so as to correspond to a change in the external image when a change in the attribute of the image signal or in the image signal is detected.
   According to the invention, the operation for editing the operation input object that no longer corresponds to the external image is no longer needed. Here, the attribute of the image signal includes the resolution of the image represented by the image signal, the path through which the image signal is inputted, and the external device which inputs the image signal.
(2) In the link-editing in the bidirectional display method to achieve the foregoing object, the operation input object may be erased when a change in the attribute of the image signal or in the image signal indicating replacement of the external device which inputs the image signal corresponding to the external image is detected.
   By employing this configuration, the operation for erasing the operation input object that no longer corresponds to the external image is no longer needed.
(3) In the link-editing in the bidirectional display method to achieve the foregoing object, when a change in the attribute of the image signal or in the image signal indicating enlargement or reduction of an external object represented by the external image is detected, the operation input object may be enlarged or reduced according to the enlargement or the reduction of the external object. (4) Also, when a change in the attribute of the image signal or in the image signal indicating movement of the external object represented by the external image is detected, the operation input object may be moved according to the movement of the external input object.

By employing these configurations, the operation input object corresponding to the external image before the change can be made to correspond to the external image after the change.

The invention can also be applied to a bidirectional display device. Also, the functions of each element described in the claims are implemented by a hardware resource whose functions are specified by its configuration, a hardware resource whose functions are specified by a program, or a combination of these. Moreover, the functions of these respective elements are not limited to those implemented by hardware resources that are physically independent of each other.

### Brief Description of Drawings

[FIG. 1] FIG. 1 is an image screen configuration view according to an embodiment of the invention.
[FIG. 2] FIG. 2 is a block diagram according to an embodiment of the invention.
[FIG. 3] FIG. 3 is an image screen configuration view according to the embodiment of the invention.
[FIG. 4] FIG. 4 is a flowchart according to the embodiment of the invention.
[FIG. 5] FIG. 5 is an image screen configuration view according to the embodiment of the invention.
[FIG. 6] FIG. 6 is an image screen configuration view according to an embodiment of the invention.
[FIG. 7] FIG. 7 is a flowchart according to an embodiment of the invention.
[FIG. 8] FIG. 8 is an image screen configuration view according to an embodiment of the invention.

### Description of Embodiments

Hereinafter, an embodiment of the invention will be described referring to the accompanying drawings. Equivalent components in the respective drawings are denoted by the same reference signs and duplicate explanation thereof is omitted.

### 1. Outline

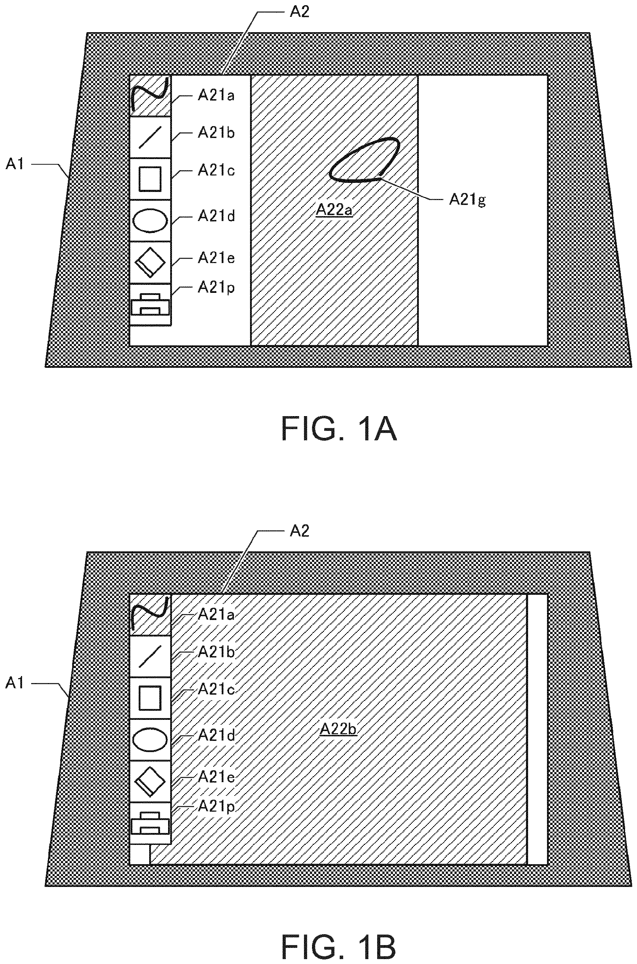

A projector 1 as an example of the bidirectional display device of the invention is a device which projects and displays an image on a projection surface such as wall, desk, or dedicated image screen, as an image screen. As shown in FIG. 1A, the projector 1 projects a window image A2 as a combined image formed by combining an external image A22a based on an image signal inputted from an external device such as PC or smartphone and an operation input object A21g corresponding to an operation to the projection surface.

As a transition is made from the state where the external image A22a shown in FIG. 1A based on an image signal inputted from a first external device is displayed to the state where an external image A22b shown in FIG. 1B based on an image signal inputted from a second external device is displayed, the projector 1 erases the operation input object A21g displayed previously along with the external image A22a, according to the operation to the projection surface where the external image A22a is displayed.

### 2. Configuration of Projector

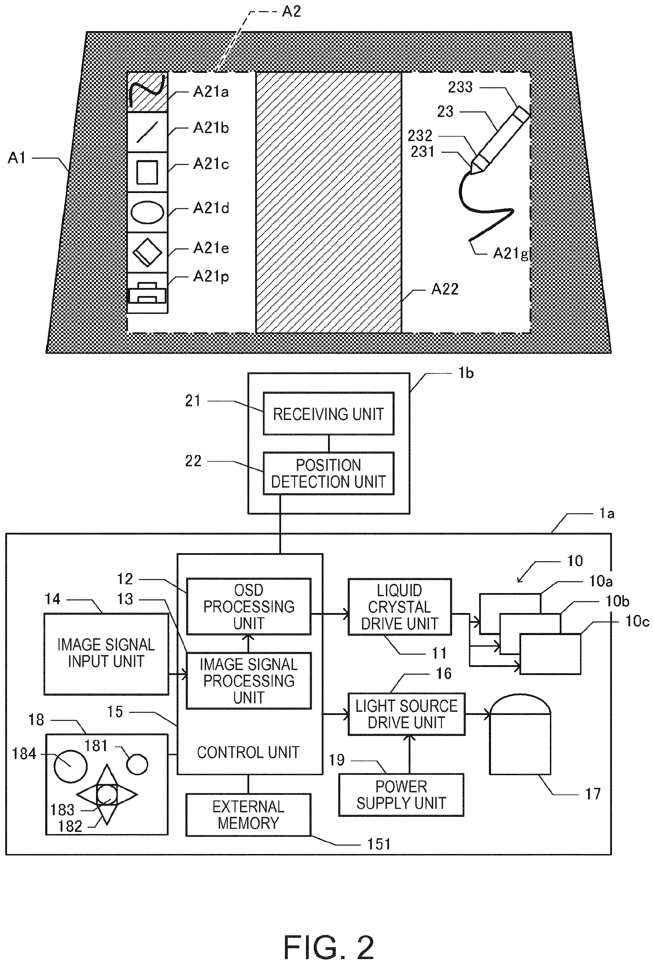

As shown in FIG. 2, the projector 1 has a light source drive unit 16, a projection light source 17, a liquid crystal light valve 10 and a liquid crystal drive unit 11 as a display unit in a first casing 1a, and also has an input/output interface 14, a control unit 15, an external memory 151, an operation unit 18 and a power supply unit 19 or the like. Also, the projector 1 has a receiving unit 21 and a position detection unit 22 as an operation detection unit in a second casing 1b connected to the first casing 1a. Moreover, the projector 1 has an electronic pen 23 as a transmitting unit.

The projection light source 17 is formed by a high-pressure mercury lamp, LED (light emitting diode), laser or the like, and is driven by the light source drive unit 16. The input/output interface 14, as an image signal input unit and a signal change detection unit has a plurality of types of input terminals such as USB terminal, Ethernet (trademark registered) terminal, HDMI (trademark registered) terminal, RS232c terminal and USB terminal, and has various image signals inputted from an external device. The control unit 15 controls each part of the projector 1 by executing a control program stored in the external memory 151. Also, the control unit 15, functioning as a drawing unit, an output unit and a link-editing unit, has an image signal processing unit 13 and an OSD processing unit 12, executes drawing processing based on an image signal inputted from an external device and an operation position signal inputted from the position detection unit 22, and outputs a projection signal as a display signal. The image signal processing unit 13 outputs image data on an external image layer and image data on an operation input layer to the OSD processing unit 12, as the result of the drawing processing based on the image signal inputted from the external device and the operation position signal inputted from the position detection unit 22. The OSD processing unit 12 combines the image data on the respective layers and outputs a projection signal corresponding to the liquid crystal light valve 10. The liquid crystal drive unit 11 converts the projection signal outputted from the OSD processing unit 12 into an analog signal to drive each pixel of the liquid crystal light valve 10. The liquid crystal light valve 10 has three liquid crystal panels 10a, 10b, 10c each of which controls, for each pixel, the transmittance of light with red, green and blue wavelengths radiated from the projection light source 17 and separated by a dichroic mirror, not illustrated. The operation unit 18 has a menu key 181 for inputting an instruction to project an OSD menu, a select key 182 and an enter key 183 for selecting an item on the OSD menu, and a power switch 184 for turning on and off the power supply to the power supply unit 19 from an external power source. The power supply unit 19 supplies electricity to each part of the projector 1.

The receiving unit 21 is an infrared video camera which picks up the entirety of a projection area A1 on the projection surface. The receiving unit 21 receives light with an infrared wavelength, and outputs image data corresponding to light with an infrared wavelength cast from the electronic pen 23 during the period when the tip of the electronic pen 23 is in contact with the projection surface within the projection area A1. The position detection unit 22 analyzes the image data outputted from the receiving unit 21, thereby detects the light emitting position of the light with the infrared wavelength, that is, the position of the electronic pen 23, and outputs an operation position signal indicating the position of the electronic pen 23. The operation position signal is converted into the coordinates of the window image A2 by the control unit 15.

The electronic pen 23 has a touch sensor 231, a light emitting unit 232 and a power switch 233, in a pen-type casing. The touch sensor 231 is provided at the tip of the electronic pen 23 and detects a contact state and a non-contact state with an object. The light emitting unit 232 is provided near the tip of the electronic pen 23, and casts light with an infrared wavelength as an operation signal during the period when the touch sensor 231 is detecting the contact state with an object. The power switch 233 is a switch for controlling the power supply to the touch sensor 231 and the light emitting unit 232 from a battery, not illustrated.

### 3. Bidirectional Projection Method

### 3-1. Drawing Layer and Drawing Area

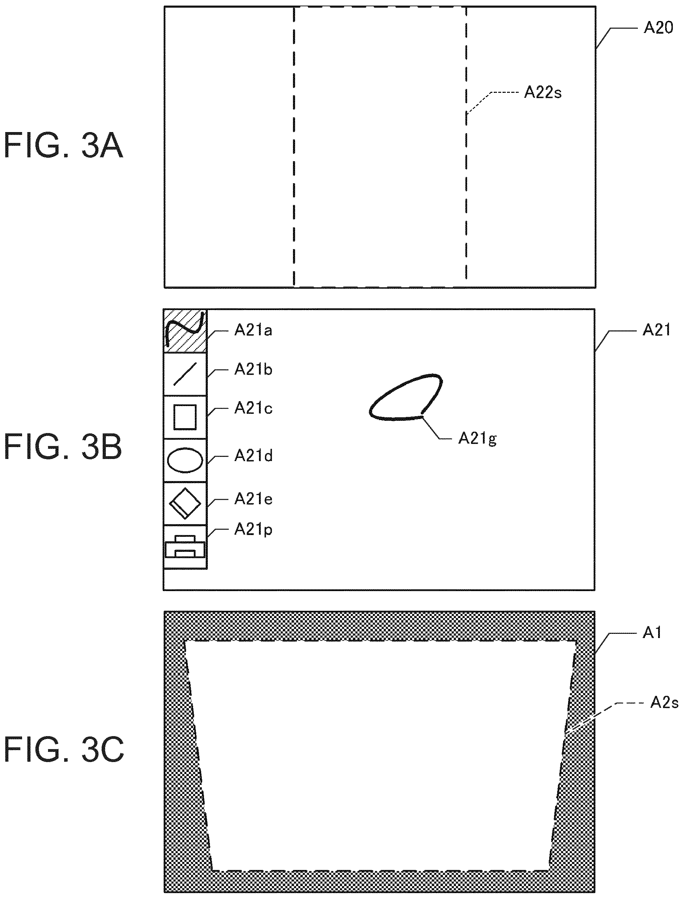

Next, referring to FIG. 3, layers and areas (drawing areas) where the control unit 15 draws an external image and an operation input object will be described.

An external image layer A20 shown in FIG. 3A and an operation input layer A21 shown in FIG. 3B are combined into a drawing area A2s within the projection area A1 shown in FIG. 3C. Here, an image of the drawing area A2s formed by combining the external image layer A20 and the operation input layer A21 is referred to as window image. The drawing area A2s of the window image with respect to the projection area A1, which is the maximum area available for projection by the projector 1, is determined by the resolution (real resolution) in the effective area of the liquid crystal light valve 10 and a keystone correction value. When keystone correction is performed, the drawing area A2s of the window image is a non-rectangle that is smaller than the projection area A1, which is the maximum area available for projection by the projector 1, as indicated by a dashed line in FIG. 3C. The keystone correction value may be automatically set on the basis of the result of detecting the projection state or may be set by the user using the OSD menu. The image signal processing unit 13 of the control unit 15 separately draws the external image layer A20 shown in FIG. 3A and the operation input layer A21, and the OSD processing unit 12 superimposes and combines the two layers into the area A2s and thus outputs a projection signal for projecting the window image A2.

On the external image layer A20, an external image is drawn on the basis of an image signal inputted from the input/output interface 14, that is, on the basis of an image signal outputted from an external device. If the aspect ratio of the external image is different from the aspect ratio of the window image A2, the control unit 15 sets a drawing area A22s for the external image in such a way that the external image does not extend out of the drawing area of the window image A2 and that two sides of the external image overlap with two sides of the window image A2. If the resolution of the external image represented by the inputted image signal and the preset resolution of the drawing area do not coincide with each other, the external image is enlarged or reduced.

The operation input layer A21 is drawn more on the forward side than the external image layer A20 in the area A2s. On the operation input layer A21, the image signal processing unit 13 draws icons A21a, A21b, A21c, A21d, A21e, A21p, and the operation input object A21g corresponding to an operation position signal inputted from the position detection unit 22. The icons A21a, A21b, A21c, A21d, A21e indicate areas for allowing the user to select which graphic pattern is to be used to reflect an operation with the electronic pen 23 to the operation area on the projection surface, onto the operation input image A21.

When the operation position signal indicating the areas where the icons A21a, A21b, A21c, A21d, A21e are drawn is inputted from the position detection unit 22, the control unit 15 prepares drawing processing corresponding to each of the areas.

When the tip of the electronic pen 23 touches the area where the icon A21a is projected, the image signal processing unit 13 draws, on the operation input layer A21, the subsequent touch trajectory of the tip of the electronic pen 23 on the projection surface, as the operation input object A21g. When the tip of the electronic pen 23 touches the area where the icon A21b is projected, the image signal processing unit 13 changes the thickness of the line drawn on the operation input layer A21. When the tip of the electronic pen 23 touches the area where the icon A21c is projected, the image signal processing unit 13 draws, on the operation input layer A21, a rectangle in which the start point and the end point of the subsequent touch trajectory of the tip of the electronic pen 23 on the projection surface come at both ends of a diagonal line. When the tip of the electronic pen 23 touches the area where the icon A21d is projected, the image signal processing unit 13 draws, on the operation input layer A21, an ellipse inscribed in the rectangle in which the start point and the end point of the subsequent touch trajectory of the tip of the electronic pen 23 on the projection surface come at both ends of a diagonal line. When the tip of the electronic pen 23 touches the area where the icon A21e is projected, the image signal processing unit 13 erases the operation input object A21g corresponding to the previous operation to the projection surface using the electronic pen 23, on the subsequent touch trajectory of the tip of the electronic pen 23 on the projection surface. Also, during the period when the drawing processing corresponding to these icons A21a, A21b, A21c, A21d, A21e is prepared or executed, the image signal processing unit 13 performs drawing to highlight the corresponding icons A21a, A21b, A21c, A21d, A21e. The icon A21p indicates the area where the tip of the electronic pen 23 should be brought in contact with the projection surface in order to input a print instruction.

### 3-2. Link-Editing of Operation Input Object

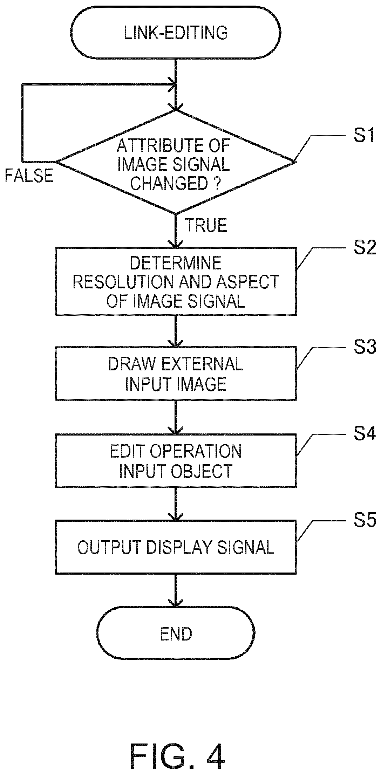

Next, the editing of the operation input object with a change in the attribute of the image signal will be described with reference to FIG. 4. When the attribute of the image signal inputted to the control unit 15 from the input/output interface 14 is changed, the control unit 15 starts the update processing of Step S2 and onward (S1). Specifically, the control unit 15 determines whether the resolution of the image signal inputted to the control unit 15 from the input/output interface 14 is changed. That is, here, whether the external device which inputs the image signal corresponding to the external image is replaced or not.

In Step S2, the control unit 15 determines the resolution and aspect of the image signal after the attribute is changed.

Next, the control unit 15 draws an external image on the basis of the image signal after the attribute is changed (S3). At this point, the control unit 15 sets a drawing area for the external image, as described already, and draws the external image on the external image layer A20 while enlarging or reducing the image according to need.

Next, the control unit 15 edits the operation input object (S4) and subsequently outputs a display signal for projecting the entirety of the projection area A1 (S5).

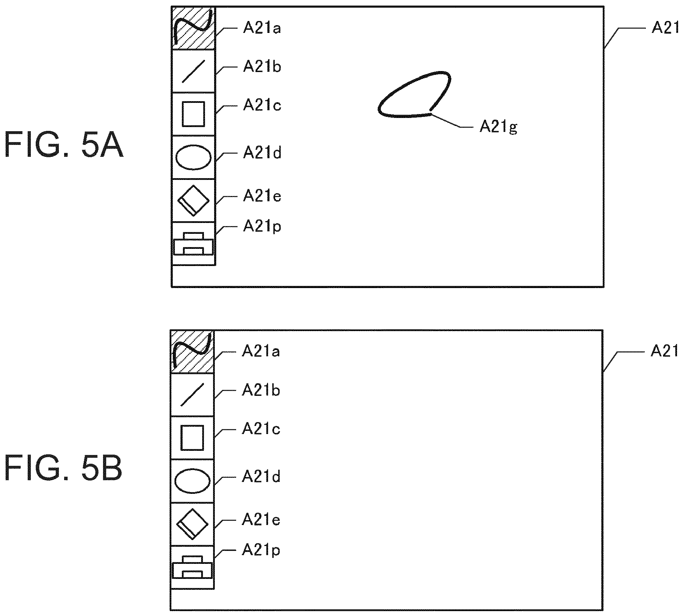

When the external device connected to a specific terminal of the input/output interface 14 is replaced, for example, when a PC with a horizontally long image screen resolution is connected to a USB terminal to which a smartphone with a vertically long image screen resolution is previously connected, the resolution of the image signal inputted to the control unit 15 from the input/output interface 14 changes. In this case, the control unit 15 erases the operation input object A21g shown in FIG. 5A drawn before the change in the attribute of the image signal inputted from the input/output interface 14, as shown in FIG. 5B. Consequently, the image displayed on the projection surface by the projector 1 changes as shown in FIG. 1A to FIG. 1B, and the operation input object A21g disappears from the image screen.

Here, as a method for erasing only the operation input object from the operation input layer, an identifier indicating the operation input object or the icon is provided for each pixel on the operation input layer, and all of the pixels provided with an identifier indicating the operation input object are reset to an initial value. The initial value in this case is a pixel value such that the value of the pixel on the external image layer on the back side is added, weighted by 100%, and the value of the pixel on the operation input layer on the forward side is added, weighted by 0%, at the time of superimposing and combining the layers. Also, a method may be employed in which the operation input layer is divided into a layer for drawing the operation input object and a layer for drawing the icons A21a, A21b, A21c, A21d, A21e, A21p, or the operation input object and the respective icons are all drawn on different layers, and then the entirety of the layer for drawing the operation input object is reset to an initial value.

According to the example described above, when the external device connected to the projector 1 is replaced, the operation input object corresponding to the image signal inputted from the external device before the replacement disappears from the image screen. Therefore, the operation of editing the operation input object which no longer corresponds to the external image is not needed.

### 4. Other Embodiments

The technical scope of the invention is not limited to the above example. As a matter of course, various changes can be added without departing from the scope of the invention.

For example, the operation input layer may be managed corresponding to the terminal to which the external device is connected, and when the terminal for inputting an image signal to the input/output interface 14 from the external device is changed, display/non-display of the operation input layer may be switched. For example, it is now assumed that a BD (Blu-ray disc) player is connected to the HDMI terminal, that a PC for presentation is connected to the RGB terminal, and that a control PC is connected to the RS232c terminal. In this case, the operation input layer is stored, corresponding to the RGB terminal to which the PC for presentation is connected. When the input terminal for the image signal is switched by the control PC from the RGB terminal to the HDMI terminal, the terminal inputting the image signal to the input/output interface 14 from the external device is to be changed. In response to this change, the control unit 15 may update the operation input layer from the display state to the non-display state. Thus, when the input terminal for the image signal is switched from the HDMI terminal to the RGB terminal, by updating the operation input layer from the non-display state to the display state, it is possible to re-display the operation input object corresponding to the external object drawn by the PC for presentation.

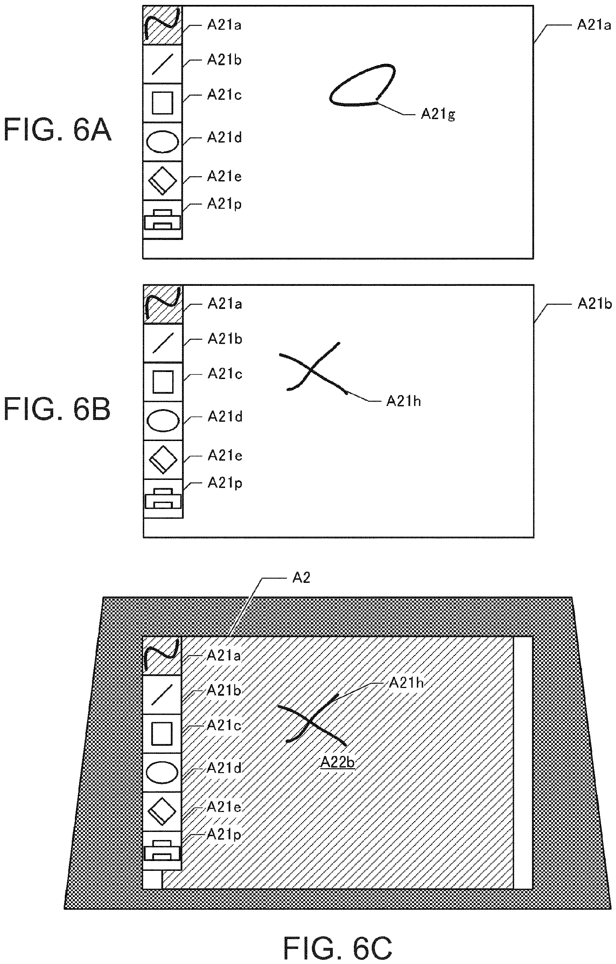

Also, it is assumed, for example, that a first PC for presentation is connected to the RGB terminal, that a second PC for presentation is connected to the USB terminal, and that a control PC is connected to the RS232c terminal. In this case, a first operation input layer is stored, corresponding to the RGB terminal to which the first PC is connected, and a second operation input layer is stored, corresponding to the USB terminal to which the second PC is connected. For example, when the input terminal for the image signal is switched by the control PC from the RGB terminal to the USB terminal, the first operation input layer A21a corresponding to the RGB terminal, shown in FIG. 6A, is updated from the display state to the non-display state, and the second operation input layer A21b corresponding to the USB terminal, shown in FIG. 6B, is updated from the non-display state to the display state. Consequently, the projection image by the projector 1 changes from the state shown in FIG. 1A to the state shown in FIG. 6C, for example. In contrast, when the input terminal for the image signal is switched by the control PC from the USB terminal to the RGB terminal, the second operation input layer A21b corresponding to the USB terminal, shown in FIG. 6B, is updated from the display state to the non-display state, and the first operation input layer A21a corresponding to the RGB terminal, shown in FIG. 6A, is updated from the non-display state to the display state. As the operation input layers are thus managed corresponding to the terminals to which the external devices are connected, switching among a plurality of operation input images can be carried out according to the external device inputting the image signal to the projector 1.

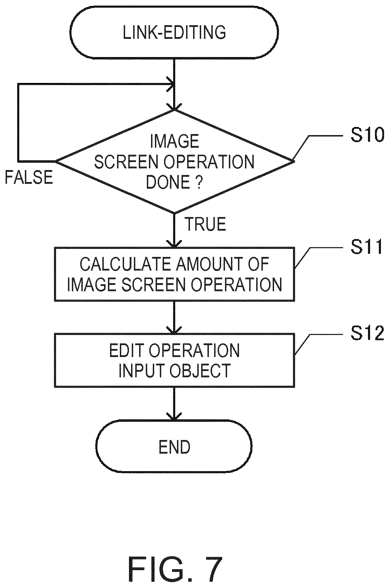

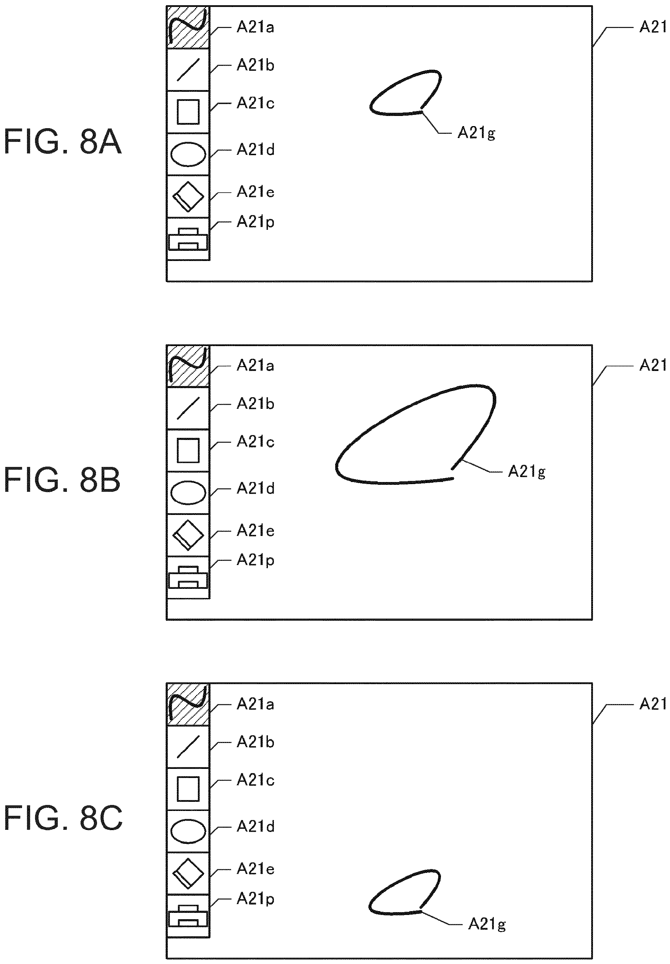

Also, the operation input object may be edited according to a change in the image signal itself, for example. FIG. 7 shows a flow of the processing of editing the operation input object according to a change in the image signal itself. The control unit 15 analyzes the image signal and thereby determines whether the image screen operation of scroll, enlargement or reduction is carried out or not, and if the image screen operation is carried out, the control unit 15 executes the link-editing processing of S11 and onward (S10). Specifically, the control unit 15 analyzes the image signal and detects the presence/absence of movement, enlargement and reduction of an external object indicated by the image signal. Here, the external object means a character or graphic pattern drawn by the external device. Next, the control unit 15 calculates the amount of movement, magnification rate and reduction arte of the external object as the amount of operation on the image screen on the basis of the result of the analysis of the image signal (S11). Next, the control unit 15 edits the operation input object according to the amount of operation on the image screen (S12). Specifically, the control unit 15 redraws the operation input object A21g as shown in FIG. 8B in such a way that the operation input object A21g before update shown in FIG. 8A is moved, enlarged or reduced according to the movement, enlargement or reduction of the external object. As the operation input object is thus edited according to a change in the image signal itself, the operation input object corresponding to the external image before the change can be made to correspond to the external image after the change.

Also, as a measure to detect an operation to the projection surface, a laser curtain may be used or light with wavelengths other than an infrared wavelength may be used, for example. Also, an operation to the projection surface may be detected by detecting light with an infrared wavelength, cast from a laser curtain and reflected by a finger, instead of using a transmitting unit having the function of transmitting an operation signal such as an electronic pen.

Also, in order to project an image, for example, the light may be modulated using one liquid crystal panel. The light may be modulated using a reflection-type liquid crystal panel. The light may be modulated using a DMD (digital mirror device). Also, in order to project a projection image in an enlarged manner, a convex mirror may be used, or a mirror does not have to be used. Also, for example, the invention may be applied to a display device such as a touch panel display.

### Reference Signs List

1 ... projector, 1a ... first casing, 1b ... second casing, 9 ... JP-A, 10 ... liquid crystal light valve, 10a, 10b, 10c ... liquid crystal panel, 11 ... liquid crystal drive unit, 12 ... OSD processing unit, 13 ... image signal processing unit, 14 ... input/output interface, 14 ... image signal input unit, 15 ... control unit, 16 ... light source drive unit, 17 ... projection light source, 18 ... operation unit, 19 ... power supply unit, 21 ... receiving unit, 22 ... position detection unit, 23 ... electronic pen, 151 ... external memory, 181 ... menu key, 182 ... select key, 183 ... enter key, 184 ... power switch, 231 ... touch sensor, 232 ... light emitting unit, 233 ... power switch, A1 ... projection area, A2 ... window image, A20 ... external image layer, A21 ... operation input layer, A21 ... operation input image, A21g ... operation input object, A22a ... external image, A22b ... external image, A22s ... drawing area, A2s ... drawing area.

## Claims

1. A bidirectional display method comprising:
having an image signal inputted from an external device;
displaying an image on an image screen on the basis of a display signal;
detecting an operation to the image screen;
drawing an operation input object corresponding to the operation to the image screen;
outputting the display signal for displaying a combined image formed by combining an external image based on the image signal and the operation input object;
detecting a change in an attribute of the image signal or in the image signal; and
link-editing the operation input object so as to correspond to a change in the external image when a change in the attribute of the image signal or in the image signal is detected.

2. The bidirectional display method according to claim 1, wherein in the link-editing, the operation input object is erased when a change in the attribute of the image signal or in the image signal indicating replacement of the external device which inputs the image signal corresponding to the external image is detected.

3. The bidirectional display method according to claim 1 or 2, wherein in the link-editing, when a change in the attribute of the image signal or in the image signal indicating enlargement or reduction of an external object represented by the external image is detected, the operation input object is enlarged or reduced according to the enlargement or the reduction of the external object.

4. The bidirectional display method according to one of claims 1 to 3, wherein in the link-editing, when a change in the attribute of the image signal or in the image signal indicating movement of the external object represented by the external image is detected, the operation input object is moved according to the movement of the external object.

5. A bidirectional display device comprising:
an image signal input unit which has an image signal inputted from an external device;
a display unit which displays an image on an image screen on the basis of a display signal;
an operation detection unit which detects an operation to the image screen;
a drawing unit which draws an operation input object corresponding to the operation to the image screen;
an output unit which outputs the display signal for displaying a combined image formed by combining an external image based on the image signal and the operation input object;
a signal change detection unit which detects a change in an attribute of the image signal or in the image signal; and
a link editing unit which edits the operation input object so as to correspond to a change in the external image when a change in the attribute of the image signal or in the image signal is detected.
